# EUROPEAN PATENT APPLICATION

(11) **EP 4 495 858 A1**
(43) Date of publication of application: **22.01.2025**
(21) Application number: 24189569.7
(22) Date of filing: 18.07.2024
(51) Int. Cl.: G06Q 20/32

(54) **PAYMENT METHOD, APPARATUS, DEVICE AND MEDIUM BASED ON NEAR FIELD COMMUNICATION**

(30) Priority: 18.07.2023 CN 202310884417
(71) Applicant: Alipay (Hangzhou) Information Technology Co., Ltd., Hangzhou, Zhejiang 310000 (CN)
(72) Inventor: ZHANG, Senyan, Hangzhou, 310000 (CN); XU, Jianji, Hangzhou, 310000 (CN); ZHENG, Kai, Hangzhou, 310000 (CN); LUO, Hao, Hangzhou, 310000 (CN)
(74) Representative: Winter, Brandl - Partnerschaft mbB

(57) **Abstract**

Embodiments of this specification disclose a payment method based on near field communication, apparatus, and device, and a medium. The solution includes: sending, by a mobile terminal with a near field communication function, an electromagnetic signal used to trigger an NFC tag; obtaining tag information in the NFC tag in response to the electromagnetic signal, where the tag information includes payment link information; displaying, based on the payment link information, a payment page including user information of a first transaction party; obtaining payment information provided by a second transaction party based on the payment page; and sending a payment processing request including the payment information to a server, where the server is configured to complete payment based on the payment processing request.

## Description

### TECHNICAL FIELD

This application relates to the field of computer technologies, and in particular, to a payment method, apparatus, and device, and a medium based on near field communication.

### BACKGROUND

With development of computer technologies, mobile payment based on a payment code becomes more popular, and greatly improves payment experience of a user. However, as mobile applications develop, applications such as games, novels, and short videos occupy a terminal screen for more time. When payment needs to be performed, the user needs to exit a current application, find a payment application with a payment function from an application list of a terminal, and enable a code scanning function or display a payment code in the payment application. In this way, user operations are relatively complex.

Therefore, how to simplify payment operations of the user and improve user experience is an urgent technical problem to be resolved.

### SUMMARY

Embodiments of this specification provide a payment method, apparatus, and device, and a medium based on near field communication, to resolve a problem that user operations are complex in an existing payment method.

To resolve the above-mentioned technical problem, the embodiments of this specification are implemented as follows:
An embodiment of this specification provides a payment method based on near field communication, including:
sending, by a mobile terminal with a near field communication function, an electromagnetic signal used to trigger an NFC tag;
obtaining tag information in the NFC tag in response to the electromagnetic signal, where the tag information includes payment link information;
displaying, based on the payment link information, a payment page including user information of a first transaction party;
obtaining payment information provided by a second transaction party based on the payment page; and
sending a payment processing request including the payment information to a server, where the server is configured to complete payment based on the payment processing request.

An embodiment of this specification provides a payment method based on near field communication, including:
sending, by a mobile terminal with a near field communication function, an electromagnetic signal used to trigger an NFC tag;
obtaining tag information in the NFC tag in response to the electromagnetic signal, where the tag information is used to trigger a payment procedure;
obtaining, based on the tag information, transaction identification information used to indicate user payment account information in the mobile terminal; and
sending the transaction identification information to a payment device associated with the NFC tag, where the payment device is configured to execute the payment procedure based on the transaction identification information.

An embodiment of this specification provides a payment method based on near field communication, including:
obtaining, by a server, a payment processing request that includes payment information and that is sent by a mobile terminal with a near field communication function, where the payment information is provided by a second transaction party based on a displayed payment page including user information of a first transaction party, the payment page is generated by the mobile terminal based on obtained tag information in an NFC tag, and the tag information includes payment link information; and
completing a payment service for the first transaction party and the second transaction party based on the payment processing request.

An embodiment of this specification provides a payment method based on near field communication, including:
obtaining, by a server, a payment information obtaining request generated by a mobile terminal with a near field communication function based on obtained tag information in an NFC tag, where the tag information is used to trigger a payment procedure;
generating, based on the payment information obtaining request, transaction identification information used to indicate user payment account information in the mobile terminal; and
sending the transaction identification information to a payment device associated with the NFC tag, where the payment device is configured to execute a payment procedure based on the transaction identification information.

An embodiment of this specification provides a payment apparatus based on near field communication, including:
a triggering information sending module, configured to send an electromagnetic signal used to trigger an NFC tag;
a tag information obtaining module, configured to obtain tag information in the NFC tag in response to the electromagnetic signal, where the tag information includes payment link information;
a page display module, configured to display, based on the payment link information, a payment page including user information of a first transaction party;
a payment information obtaining module, configured to obtain payment information provided by a second transaction party based on the payment page; and
a request sending module, configured to send a payment processing request including the payment information to a server, where the server is configured to complete payment based on the payment processing request.

An embodiment of this specification provides a payment apparatus based on near field communication, including:
a triggering information sending module, configured to send an electromagnetic signal used to trigger an NFC tag;
a tag information obtaining module, configured to obtain tag information in the NFC tag in response to the electromagnetic signal, where the tag information is used to trigger a payment procedure;
a transaction identification obtaining module, configured to obtain, based on the tag information, transaction identification information used to indicate user payment account information in the mobile terminal; and
a transaction identification sending module, configured to send the transaction identification information to a payment device associated with the NFC tag, where the payment device is configured to execute a payment procedure based on the transaction identification information.

An embodiment of this specification provides a payment apparatus based on near field communication, including:
a request obtaining module, configured to obtain a payment processing request that includes payment information and that is sent by a mobile terminal with a near field communication function, where the payment information is provided by a second transaction party based on a displayed payment page including user information of a first transaction party, the payment page is generated by the mobile terminal based on obtained tag information in an NFC tag, and the tag information includes payment link information; and
a request processing module, configured to complete a payment service for the first transaction party and the second transaction party based on the payment processing request.

An embodiment of this specification provides a payment apparatus based on near field communication, including:
a request obtaining module, configured to obtain a payment information obtaining request generated by a mobile terminal with a near field communication function based on obtained tag information in an NFC tag, where the tag information is used to trigger a payment procedure;
an information generation module, configured to generate, based on the payment information obtaining request, transaction identification information used to indicate user payment account information in the mobile terminal; and
a sending module, configured to send the transaction identification information to a payment device associated with the NFC tag, where the payment device is configured to execute a payment procedure based on the transaction identification information.

An embodiment of this specification provides a payment device based on near field communication, including:
at least one processor; and
a storage communicatively connected to the at least one processor, where
the storage stores instructions that can be executed by the at least one processor, and the instructions are executed by the at least one processor, to enable the at least one processor to perform the following operations:
sending an electromagnetic signal used to trigger an NFC tag;
obtaining tag information in the NFC tag in response to the electromagnetic signal, where the tag information includes payment link information;
displaying, based on the payment link information, a payment page including user information of a first transaction party;
obtaining payment information provided by a second transaction party based on the payment page; and
sending a payment processing request including the payment information to a server, where the server is configured to complete payment based on the payment processing request.

An embodiment of this specification provides a payment device based on near field communication, including:
at least one processor; and
a storage communicatively connected to the at least one processor, where
the storage stores instructions that can be executed by the at least one processor, and the instructions are executed by the at least one processor, to enable the at least one processor to perform the following operations:
sending an electromagnetic signal used to trigger an NFC tag;
obtaining tag information in the NFC tag in response to the electromagnetic signal, where the tag information is used to trigger a payment procedure;
obtaining, based on the tag information, transaction identification information used to indicate user payment account information in the mobile terminal; and
sending the transaction identification information to a payment device associated with the NFC tag, where the payment device is configured to execute the payment procedure based on the transaction identification information.

An embodiment of this specification provides a payment device based on near field communication, including:
at least one processor; and
a storage communicatively connected to the at least one processor, where
the storage stores instructions that can be executed by the at least one processor, and the instructions are executed by the at least one processor, to enable the at least one processor to perform the following operations:
obtaining a payment processing request that includes payment information and that is sent by a mobile terminal with a near field communication function, where the payment information is provided by a second transaction party based on a displayed payment page including user information of a first transaction party, the payment page is generated by the mobile terminal based on obtained tag information in an NFC tag, and the tag information includes payment link information; and
completing a payment service for the first transaction party and the second transaction party based on the payment processing request.

An embodiment of this specification provides a payment device based on near field communication, including:
at least one processor; and
a storage communicatively connected to the at least one processor, where
the storage stores instructions that can be executed by the at least one processor, and the instructions are executed by the at least one processor, to enable the at least one processor to perform the following operations:
obtaining a payment information obtaining request generated by a mobile terminal with a near field communication function based on obtained tag information in an NFC tag, where the tag information is used to trigger a payment procedure;
generating, based on the payment information obtaining request, transaction identification information used to indicate user payment account information in the mobile terminal; and
sending the transaction identification information to a payment device associated with the NFC tag, where the payment device is configured to execute a payment procedure based on the transaction identification information.

An embodiment of this specification provides a computer-readable medium. The computer-readable medium stores computer-readable instructions, and the computer-readable instructions can be executed by a processor to implement the payment method based on near field communication.

One embodiment of this specification achieves the following beneficial effects:

In this embodiment of this specification, a mobile terminal can obtain payment link information in an NFC tag through near field communication, the mobile terminal can display a payment page based on the information, and a user can complete payment by entering payment information such as a payment amount on the payment page. In this way, there is no need for the user to find a payment application and then perform a corresponding payment operation in the payment application. For example, in a scenario in which payment is performed by scanning a payment code, there is no need for the user to find a payment application and then select a code scanning function in the payment application. In this embodiment of this specification, the mobile terminal can display the payment page based on the information in the NFC tag, to simplify user operations and improve user experience.

In another embodiment, a mobile terminal obtains, through near field communication, tag information used to trigger a payment procedure in an NFC tag, obtains transaction identification information, and sends the transaction identification information to a payment device, to perform payment. In this way, there is also no need for the user to find a payment application and then perform a corresponding payment operation in the payment application. For example, in a scenario in which a payment code needs to be displayed and scanned by the payment device for payment, there is no need for the user to find a payment application and then select a payment code in the payment application for display. In this embodiment of this specification, the mobile terminal can send, to the payment device based on the information in the NFC tag, transaction identification information used to perform payment, to simplify user operations and improve user experience.

### BRIEF DESCRIPTION OF DRAWINGS

To describe the technical solutions in the embodiments of this specification or in the existing technology more clearly, the following briefly describes the accompanying drawings needed for describing the embodiments or the existing technology. Clearly, the accompanying drawings in the following description merely show some embodiments of this specification, and a person of ordinary skill in the art can still derive other drawings from these accompanying drawings without creative efforts.
FIG. 1 is a schematic diagram of an application scenario of a payment method based on near field communication according to an embodiment of this specification;
FIG. 2 is a schematic flowchart of a payment method based on near field communication according to an embodiment of this specification;
FIG. 3 is a swimlane diagram of a payment method based on near field communication according to an embodiment of this specification;
FIG. 4 is a schematic diagram of an application scenario of a payment method based on near field communication according to an embodiment of this specification;
FIG. 5 is a schematic flowchart of a payment method based on near field communication according to an embodiment of this specification;
FIG. 6 is a swimlane diagram of a payment method based on near field communication according to an embodiment of this specification;
FIG. 7 is a schematic flowchart of a payment method based on near field communication according to an embodiment of this specification;
FIG. 8 is a schematic flowchart of a payment method based on near field communication according to an embodiment of this specification;
FIG. 9 is a schematic diagram of a structure of a payment apparatus based on near field communication corresponding to FIG. 2 according to an embodiment of this specification;
FIG. 10 is a schematic diagram of a structure of a payment apparatus based on near field communication corresponding to FIG. 5 according to an embodiment of this specification;
FIG. 11 is a schematic diagram of a structure of a payment apparatus based on near field communication corresponding to FIG. 7 according to an embodiment of this specification;
FIG. 12 is a schematic diagram of a structure of a payment apparatus based on near field communication corresponding to FIG. 8 according to an embodiment of this specification; and
FIG. 13 is a schematic diagram of a structure of a payment device based on near field communication according to an embodiment of this specification.

### DESCRIPTION OF EMBODIMENTS

To make the objectives, technical solutions, and advantages of one or more embodiments of this specification clearer, the following clearly and comprehensively describes the technical solutions in the one or more embodiments of this specification with reference to corresponding accompanying drawings and specific embodiments of this specification. Clearly, the described embodiments are merely some but not all of the embodiments of this specification. All other embodiments obtained by a person of ordinary skill in the art based on the embodiments of this specification without creative efforts shall fall within the protection scope of the one or more embodiments of this specification.

The following describes in detail the technical solutions provided in the embodiments of this specification with reference to the accompanying drawings.

In the conventional technology, when purchasing a product, a user usually needs to display a payment code or scan a collection code of a merchant, to perform payment. Usually, the user needs to find a payment application on a terminal, and then select a payment code or a code scanning function, to perform payment. If the user is using another application on the terminal before payment, for example, is reading an e-book or a video, the user needs to exit a current application, find the payment application, and find the payment code or the code scanning function. In this way, user operations are relatively complex.

To overcome the disadvantage in the existing technology, this solution provides the following embodiments:

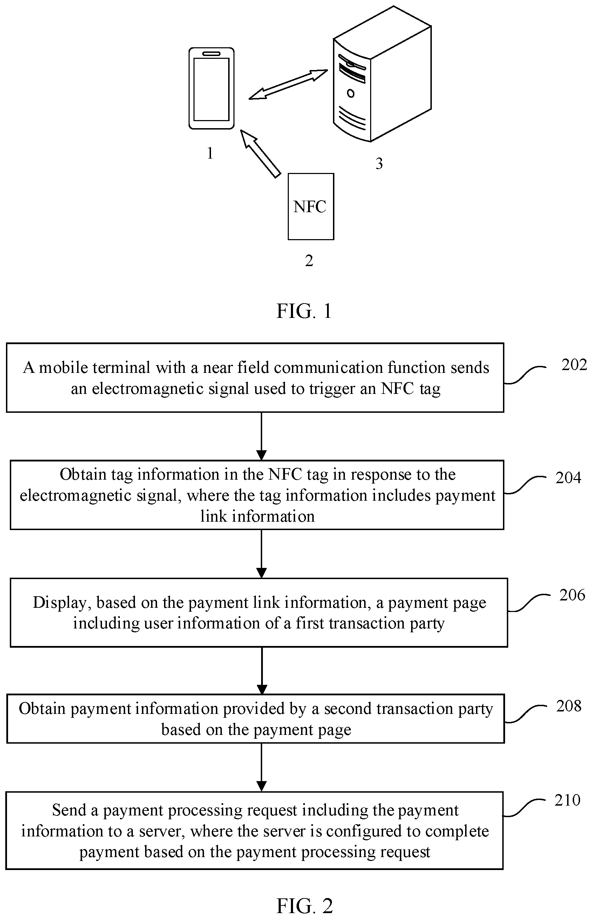

FIG. 1 is a schematic diagram of an application scenario of a payment method based on near field communication according to an embodiment of this specification. As shown in FIG. 1, this solution can include a mobile terminal 1 with a near field communication function, an NFC tag 2 carrying tag information, and a server 3 configured to process a payment service. When the mobile terminal 1 approaches the NFC tag 2, and the mobile terminal 1 and the NFC tag 2 are at a specific distance, the NFC tag can be triggered, to obtain the tag information included in the NFC tag 2. The tag information can include payment link information used to display a payment page. The mobile terminal 1 can display the payment page based on the obtained tag information. A user can enter information such as a payment amount on the payment page. The terminal 1 can send a payment request including payment information to the server 3. The server 3 can process the payment request to complete payment.

A payment method based on near field communication provided in an embodiment of this specification is specifically described below with reference to accompanying drawings.

FIG. 2 is a schematic flowchart of a payment method based on near field communication according to an embodiment of this specification. From a program perspective, a procedure can be performed by a program or an application client integrated with an application server or a terminal application.

As shown in FIG. 2, the procedure can include the following steps.

Step 202: A mobile terminal with a near field communication function sends an electromagnetic signal used to trigger an NFC tag.

Near field communication (NFC) is a near field communication technology. The mobile terminal can have the near field communication function. The mobile terminal can include a mobile terminal such as a portable terminal or a wearable terminal, for example, a mobile phone or a smartwatch. Near field communication, also referred to as short-range wireless communication, is a short-range high-frequency wireless communication technology, and allows contactless point-to-point data transmission and data exchange between electronic devices. In this embodiment of this specification, the NFC tag can be a passive electronic tag or an electronic chip, and when a mobile device with a near field communication function approaches the NFC tag, the NFC tag generates an induction signal with the mobile device, to transmit data. After the near field communication function is enabled, the mobile device can send the electromagnetic signal, and can activate an NFC tag within a preset distance, to perform data transmission. For a specific NFC communication process, references can be made to an existing NFC communication technology. Details are not described herein again.

Step 204: Obtain tag information in the NFC tag in response to the electromagnetic signal, where the tag information includes payment link information.

To-be-transmitted tag information can be pre-written into the NFC tag. In this embodiment of this specification, the tag information can include link information for payment, for example, can include a payment application that needs to be invoked and the payment link information. The mobile terminal can invoke and display a payment page based on the obtained tag information.

Step 206: Display, based on the payment link information, a payment page including user information of a first transaction party.

The first transaction party can be understood as an owner of the NFC tag. The first transaction party can represent a payee if the NFC tag is a tag used for collection; and the first transaction party can represent a payer if the NFC tag is a tag used for payment. The tag information in the NFC tag can be generated based on transaction party information provided by the first transaction party. In actual applications, payment link information used to invoke the payment page can be written into the NFC tag based on an NFC communication protocol.

Step 208: Obtain payment information provided by a second transaction party based on the payment page.

The second transaction party and the first transaction party can represent two parties that have a transaction relationship. For example, if the NFC tag is a tag used for collection, the first transaction party can represent payee, and the second transaction party can represent a payer; and if the NFC tag is a tag used for payment, the first transaction party can represent a payer, and the second transaction party can represent a payee. The payment page can include an area for filling in or selecting payment information such as a payment amount and a payment manner, and can fill in transaction information based on an actual transaction requirement. In this embodiment of this specification, the payment page can be the same as or similar to an existing payment page accessed by scanning a payment code such as a two-dimensional code by a terminal, and a user can provide the payment information in an existing common operation manner. This can be more consistent with a user habit. In actual applications, a layout, a format, content, etc. of the payment page can be set based on an actual requirement, and is not specifically limited herein.

Step 210: Send a payment processing request including the payment information to a server, where the server is configured to complete payment based on the payment processing request.

The mobile terminal can generate the payment processing request based on the payment information provided by the user, and send the payment processing request to the server, so that the server can process a complete payment service based on the received payment processing request. The payment processing request can include the payment information such as transaction party information, a transaction amount, and a transaction manner, so that the server can complete payment for two transaction parties.

It should be understood that in the method described in one or more embodiments of this specification, sequences of some steps in the method can be exchanged with each other based on an actual requirement, or some steps in the method can be omitted or deleted.

In the method in FIG. 2, the mobile terminal can obtain the payment link information in the NFC tag through near field communication, the mobile terminal can display the payment page based on the information, and the user can complete payment by entering the payment information such as the payment amount on the payment page. In this way, there is no need for the user to find a payment application and then perform a corresponding payment operation in the payment application. For example, in a scenario in which payment is performed by scanning a payment code, there is no need for the user to find a payment application and then select a code scanning function in the payment application. In this embodiment of this specification, the mobile terminal can display the payment page based on the information in the NFC tag, to simplify user operations and improve user experience.

In a common NFC payment solution in the conventional technology, for example, for NFC card payment in a bus, a subway, etc., the mobile terminal such as a mobile phone simulates an NFC card; information in the NFC card is sent to a payment device, for example, a bus card reader or a subway gate machine through a near field communication technology; and the payment device completes payment. The payment device needs to be laid at a specific scenario location, and the payment device is equivalent to an NFC card reader. In this way, costs are relatively high.

In actual applications, most mobile terminals have a near field communication function and have a near field communication module. In this embodiment of this specification, the mobile terminal is equivalent to an NFC card reader. The NFC tag can be a passive electronic tag. A payment procedure can be simplified based on a function of the mobile terminal. In addition, the NFC tag has a small size, and can be conveniently placed at a location at which payment needs to be performed. An existing hardware device does not need to be changed or changed too much, and costs are low. This can be applied to a plurality of situations, and an application scope can be wider.

In addition, in this embodiment of this specification, through near field communication, when the mobile terminal approaches an NFC tag carrying information used for payment, the mobile terminal can display a payment page. The user provides payment information on the payment page. The payment page can be the same as a payment page presented by scanning a code by the user by using the terminal. The server processing the payment request can process the payment request through an existing processing link, without a need to set up a new service processing link. In this way, workload of a developer can be reduced, overheads of the server can be reduced, and implementation of an NFC communication payment manner is accelerated.

Based on the method in FIG. 2, an embodiment of this specification further provides some specific implementations of the method, which are described below.

In actual applications, payment can be performed by using a payment application with a payment function in the mobile terminal. Optionally, in this embodiment of this specification, the tag information can include first link information used to start the payment application. Displaying, based on the payment link information, the payment page including user information of a first transaction party can specifically include:
starting the payment application in the mobile terminal based on the first link information; and
displaying the payment page corresponding to the first transaction party based on the started payment application.

The payment application can represent a terminal application with a payment function. After obtaining, through near field communication, instruction information that is in the tag information and that is used to start the payment application, the mobile terminal can start the payment application in the terminal, and then display the payment page based on the started payment application. The payment page can indicate an application page of the payment application.

The instruction information can include an application identification of a to-be-started payment application. After reading the instruction information, the terminal can determine the payment application based on the application identification. In actual applications, whether the payment application exists in the terminal can be further determined. If the payment application does not exist in the terminal, prompt information indicating that payment cannot be performed can be generated, or prompt information indicating that the user downloads and installs the payment application can be generated; or the payment application exists in the terminal, the payment application can be started.

In actual applications, the NFC tag information can include information used to represent a processed service, for example, can include information used to display the payment page. The mobile terminal can display the payment page based on the tag information. Optionally, in this embodiment of this specification, the tag information can include request identification information used to request to obtain payment page information, and displaying the payment page based on the started payment application can specifically include:
generating, by the payment application in a started state, a payment page information obtaining request based on the request identification information;
sending the payment page information obtaining request to the server;
obtaining payment page information that is generated by the server based on the payment page information obtaining request and that includes the user information of the first transaction party; and
displaying, based on the payment page information, the payment page including the user information of the first transaction party.

The tag information can include information about the first transaction party, for example, merchant identification information, and can further include token information for requesting the server to provide information required for the payment page. The mobile terminal or the started payment application can send the payment page information obtaining request to the server. The server can generate the payment page information based on the user information of the first transaction party, and feed back the payment page information to the mobile terminal. The mobile terminal can render and display the payment page based on the obtained payment page information. In actual applications, the payment page information can alternatively be generated by the mobile terminal. For example, the mobile terminal can include a page template of the payment page. If the NFC tag information includes information such as a name, a nickname, and an account identification of the first transaction party, the mobile terminal can supplement the information about the first transaction party to the page template, and can further determine a payment manner used by a user who logs in to the mobile terminal. Information about the payment manner is also added to the page template, and the payment page can be generated and displayed.

In actual applications, the payment page can include the information about the first transaction party, for example, a merchant name, a payee nickname, partial collection account information, or a payee name, can further include an area used to fill in or select a payment amount, and can further include a control used to determine the payment information, for example, a submission control or a payment confirmation control. In actual applications, after the user submits the payment information, a payment password input page can be further displayed, so that the user enters a password to perform payment.

In this embodiment of this specification, a transaction party can further be verified, to ensure payment security. Optionally, in this embodiment of this specification, the tag information can include user identification information of the first transaction party, for example, payee information or merchant information. The method in this embodiment of this specification can further include:
determining, based on the user identification information, whether the first transaction party has transaction permission, to obtain a determining result; and
displaying the payment page including user information of a first transaction party can specifically include:
   if the determining result indicates that the first transaction party has the transaction permission, displaying the payment page including the user information of the first transaction party.

In actual applications, validity and compliance of the transaction party can be verified. A server with a verification function can store information about a transaction party with transaction permission, for example, a list of transaction parties with transaction permission. Whether the first transaction party is a transaction party with transaction permission can be determined, or whether the first transaction party is located in the list of transaction parties with transaction permission is determined. If yes, it can be determined that the first transaction party has transaction permission. A third party can also verify compliance of the transaction party, etc. A specific verification manner is not specifically limited herein.

In the conventional technology, a payment code such as a two-dimensional code is usually placed on a cash register or pasted in a place convenient for payment by the user, or can be carried on a merchant. In this embodiment of this specification, the NFC tag can be carried on an existing payment code card, for example, pasted or placed at a location that does not affect identification of the two-dimensional code, for example, on a back or a side of a two-dimensional code image, and an independent carrier can be disposed to place the NFC tag. Optionally, in this embodiment of this specification, the NFC tag may be located in a carrier including a payment code of the first transaction party, or may be located in a carrier that does not include a payment code of the first transaction party. The payment code can be understood as a scannable payment code image in an image form, for example, a common two-dimensional code.

Because the NFC tag has a small size, in this embodiment of this specification, the NFC tag can be placed at any location convenient for payment by the user, for example, can be placed on a back of the carrier of the payment code or a front location that does not affect the payment code. When the user moves the mobile terminal to approach or abut the carrier, a payment procedure can be entered, and the payment page is displayed. An NFC payment card can also be disposed. The payment card can include an NFC payment identification. When the user moves the mobile terminal to approach or abut the payment card, a payment procedure can also be entered, and the payment page is displayed.

In actual applications, before performing payment, the user can be processing another service in the mobile terminal, for example, is watching a video, playing a game, reading an e-book, reading news, or communicating with another user through instant messaging. In this embodiment of this specification, the user can perform payment without a need to exit a current application that is being used before payment. Optionally, in this embodiment of this specification, if the mobile terminal is displaying an application page of a second application when the tag information that is in the NFC tag and that includes the payment link information is obtained, displaying the payment page corresponding to the first transaction party can specifically include:
displaying the payment page at an upper layer of the application page of the second application through superimposition.

In actual applications, the payment page can be displayed in a part or all of an area on the application page of the second application.

Optionally, the method in this embodiment of this specification can further include:
obtaining an exit operation performed by the second transaction party on the payment page; and
switching to the application page of the second application based on the exit operation for display.

The payment page can include a control used to indicate to exit the payment page, for example, a payment confirmation control or a close control. The user can exit the payment page by performing an operation on the control, or can exit the payment page by performing a preset operation on the payment page, for example, a sliding operation in a preset direction such as a leftward sliding operation, a rightward sliding operation, an upward sliding operation, or a downward sliding operation. In this embodiment of this specification, after the payment page is exited, an application page displayed by the terminal before payment can continue to be displayed, to further improve user experience.

In this embodiment of this specification, after the user submits the payment information or enters the payment password, a page indicating a transaction result can be further displayed. A transaction result page can also be superimposed at an upper layer of all or a part of an area of the application page of the second application. The transaction result page can also include a control used to exit or close the page. After the page is exited or closed, the application page of the second application can continue to be displayed.

In actual applications, after obtaining the information indicating the transaction result, the mobile terminal can further generate prompt information indicating the transaction result, for example, an SMS message or a prompt tone, or can display the prompt information on the application page of the second application.

In actual applications, when the merchant allows a plurality of payment applications for payment, after the mobile terminal approaches or abuts the NFC tag, a page for the user to select a payment application can be further displayed, and the user can select a payment application to perform payment. Optionally, in this embodiment of this specification, the tag information can include first triggering information, the first triggering information is used to trigger the mobile terminal to determine a terminal application with a payment function in the mobile terminal and generate an application selection page, and the method in this embodiment of this specification can further include:
determining, in response to the first triggering information, the terminal application with the payment function in the mobile terminal;
generating the application selection page based on the terminal application with the payment function; and
displaying the application selection page.

The application selection page can include an application identification of a terminal application with a payment function, for example, an icon. Terminal applications can be sorted and displayed in a sequence of start times, and a terminal application recently used by the user can be placed at a front location.

Optionally, in this embodiment of this specification, after displaying the application selection page, the method can further include:
obtaining a target terminal application selected by the second transaction party from the application selection page; and
displaying, based on the payment link information, the payment page including transaction information of a first transaction party can specifically include:
   accessing the payment link information by using the target terminal application; and
   displaying, in the target terminal application, the payment page including the transaction information of the first transaction party.

Similar to the above-mentioned display manner of the payment page or the transaction result page, if the mobile terminal is using the second application before obtaining the tag information in the NFC tag, the application selection page can be displayed at the upper layer of all or a part of the application page of the second application through superimposition. The application selection page can also include a control used to exit or close the page, or a preset operation. After the page is exited or closed, the application page of the second application can continue to be displayed.

In actual applications, the payment page, the transaction result page, and other application selection page related to the payment procedure, and can be displayed above the application page of the second application in a semi-transparent manner or a non-transparent manner.

In actual applications, the mobile terminal can have a near field communication function, and can further have components such as a camera used to scan the payment code. To avoid disturbing the user and minimize resource consumption as much as possible, if the user has enabled the code scanning function, for example, has enabled a code scanning function of a specific payment application, and is ready to perform payment by scanning a payment code by using a terminal, an NFC payment procedure does not need to be started. Optionally, in this embodiment of this specification, before the obtaining tag information in the NFC tag in response to the electromagnetic signal, the method can include:
determining whether the mobile terminal has started a code scanning application used to scan a payment code image; and
the obtaining tag information in the NFC tag in response to the electromagnetic signal can specifically include:
   obtaining the tag information in the NFC tag in response to the electromagnetic signal if the mobile terminal does not start the code scanning application used to scan the payment code image.

In actual applications, if the mobile terminal has started the code scanning application used to scan the payment code image, for example, the user has tapped "Scan" or another code scanning control in the payment application, a camera of the mobile terminal is in a started state, and information in the NFC tag can no longer be read, or a procedure that can be triggered by information in the NFC tag is no longer performed.

It can be understood that, in this embodiment of this specification, the payment procedure can be triggered through near field communication only when the user grants authorization. For example, the user agrees to enable an NFC payment manner, and user information can be obtained and used for payment in a range for which the user grants authorization.

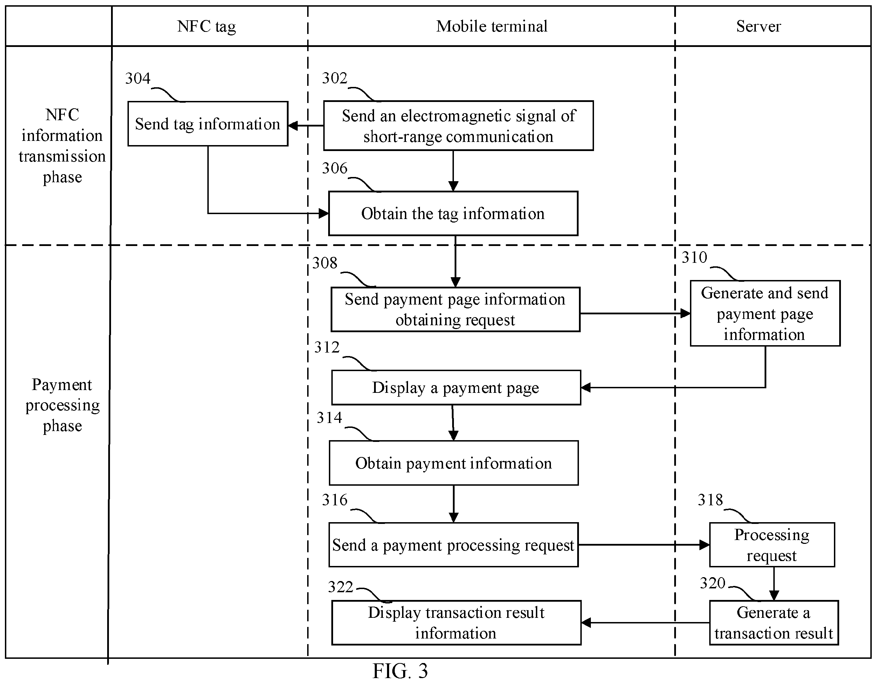

To describe more clearly the payment method based on near field communication provided in the embodiments of this specification, FIG. 3 is a swimlane diagram of a payment method based on near field communication according to an embodiment of this specification. As shown in FIG. 3, the solution can include an NFC information transmission phase and a payment processing phase, and can specifically include the following steps.

Step 302: A mobile terminal with a near field communication function sends an electromagnetic signal used to trigger an NFC tag. An NFC function of the mobile terminal can be enabled to send the electromagnetic signal, to trigger an NFC electronic tag or chip within a preset distance to establish near field communication.

Step 304: When the mobile terminal approaches or abuts the NFC tag, the mobile terminal can establish near field communication with the NFC tag, where the NFC tag can send tag information to the mobile terminal.

Step 306: The mobile terminal can obtain the tag information in the NFC tag in response to the electromagnetic signal. The tag information includes payment link information. The tag information can include identification information of a first transaction party, for example, a user ID, and can further include payment link information used to trigger a payment procedure. A payment application in the mobile terminal can be started based on the link information, and a payment page is displayed.

Step 308: Generate a payment page information obtaining request based on the payment link information, and send the payment page information obtaining request to a server. The payment link information can include the link information for starting the payment application. The mobile terminal can start the corresponding payment application, and then send the payment page information obtaining request to the server based on the payment application. The request can include the identification information of the first transaction party, for example, merchant identification information, and can further include a terminal identification of the mobile terminal or an application user identification of a user who logs in to the payment application in the mobile terminal, so that the server can determine two parties that carry out the transaction, and generate the payment page information.

Step 310: The server can generate the payment page information based on the obtaining request sent by the mobile terminal, and feed back the payment page information to the mobile terminal.

Step 312: The mobile terminal can display the payment page based on the obtained payment page information. The payment page can include an area used by a user to fill in payment information such as a payment amount and a payment manner.

Step 314: The user fills in the payment information on the payment page, and the mobile terminal can obtain the payment information provided by the user.

Step 316: The mobile terminal can generate a payment processing request based on the payment information provided by the user, and send the payment processing request to the server, to request the server to process the transaction.

Step 318: The server can obtain the payment processing request sent by the mobile terminal, and process the transaction based on transaction information such as information about two transaction parties included in the payment processing request or information about two transaction parties corresponding to the payment processing request, or a transaction amount.

Step 320: The server can further generate a transaction result, and feed back the transaction result to the mobile terminal.

Step 323: The mobile terminal can display transaction result information based on the transaction result fed back by the server.

In the conventional technology, a user can access a payment page by scanning a code by using a terminal. In this embodiment of this specification, the payment page can be invoked through NFC short-range communication, to simplify a user operation. It can be briefly understood that, the NFC tag in this embodiment of this specification can include information that is used to carry out a transaction and that is carried in a payment code, for example, a merchant identifier and a token that triggers a payment procedure in the conventional technology.

In an existing payment manner, the mobile terminal can further serve as a scanned object. For example, a payment code is displayed in the mobile terminal, and is scanned by a payment device to complete payment. In an existing manner, the user needs to open the payment application, find the payment code, and display the payment code. For example, if the user is using another application before payment, the user also needs to exit the application, and then find the payment application for payment. In this way, a relatively large quantity of user operation steps are required. To simplify the user operation steps and improve user experience, an embodiment of this specification further provides another payment method based on near field communication.

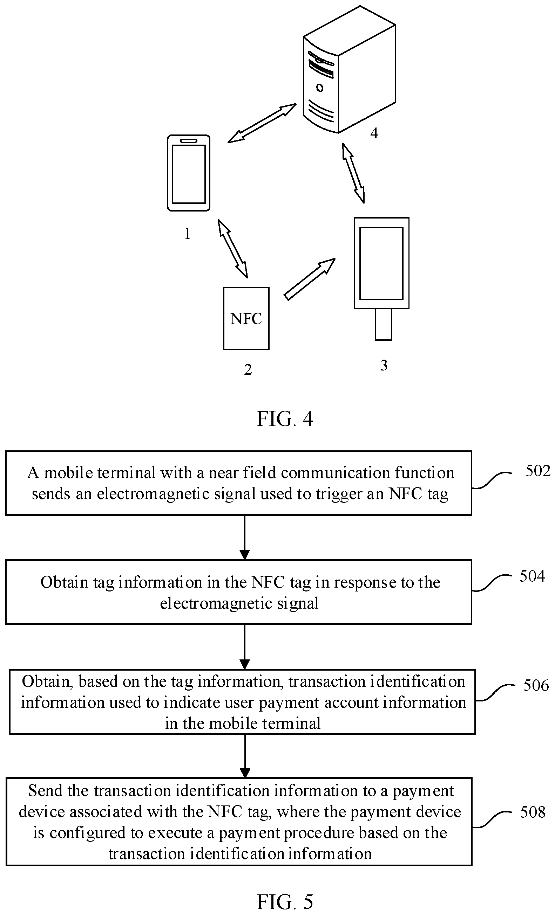

FIG. 4 is a schematic diagram of an application scenario of a payment method based on near field communication according to an embodiment of this specification. As shown in FIG. 4, the solution can include a mobile terminal 1 with a near field communication function, an NFC tag 2 carrying tag information, a payment device 3 associated with the NFC tag, and a server 4 configured to process a payment service. When the mobile terminal 1 approaches the NFC tag 2, and the mobile terminal 1 and the NFC tag 2 are at a specific distance, the NFC tag can be triggered, to obtain tag information included in the NFC tag 2. The tag information can include information used to trigger a payment procedure. The mobile terminal 1 can send, based on the obtained tag information, a request for obtaining transaction identification information to the server 4. The server 4 can feed back, to the mobile terminal 1, transaction identification information indicating user payment account information in the mobile terminal. The mobile terminal 1 can send the transaction identification information to the payment device 3 through NFC communication. The server 4 can alternatively send the transaction identification information to the payment device 3 through network transmission. After obtaining the transaction identification information, the payment device 3 can send a payment processing request to the server 4. The server 4 can process a payment service between a user of the mobile terminal and a user of the payment device. Based on the schematic diagram of the scenario, FIG. 5 is a schematic flowchart of a payment method based on near field communication according to an embodiment of this specification. From a program perspective, a procedure can be performed by a program or an application client integrated with an application server or a terminal application.

As shown in FIG. 5, the procedure can include the following steps.

Step 502: A mobile terminal with a near field communication function sends an electromagnetic signal used to trigger an NFC tag.

Similar to a principle of the above-mentioned embodiments, the mobile terminal can include a mobile terminal such as a portable terminal or a wearable terminal, for example, a mobile phone or a smartwatch. Near field communication, also referred to as short-range wireless communication, is a short-range high-frequency wireless communication technology, and allows contactless point-to-point data transmission and data exchange between electronic devices. In this embodiment of this specification, the NFC tag can be a passive electronic tag or an electronic chip, and when a mobile device with a near field communication function approaches the NFC tag, the NFC tag generates an induction signal with the mobile device, to transmit data. After the near field communication function is enabled, the mobile device can send the electromagnetic signal, and can activate an NFC tag within a preset distance, to perform data transmission. For a specific NFC communication process, references can be made to an existing NFC communication technology. Details are not described herein again.

Step 504: Obtain tag information in the NFC tag in response to the electromagnetic signal, where the tag information is used to trigger a payment procedure.

The tag information can include information used to trigger the payment procedure, for example, information for starting a payment application or merchant information. The mobile terminal can obtain information in the NFC tag through short-range communication, and trigger execution of the payment procedure.

Step 506: Obtain, based on the tag information, transaction identification information used to indicate user payment account information in the mobile terminal.

The transaction identification information can be used to determine a user payment account in the mobile terminal. The account can be a payment account if the tag information included in the NFC tag is a payment procedure used to perform payment, and the account can be a collection account if the tag information included in the NFC tag is a payment procedure used to perform collection. This is not specifically limited herein. In actual applications, a user can perform payment by using a terminal application with a payment function in the mobile terminal. The user payment account can also be a user account for logging in to the terminal application.

Step 508: Send the transaction identification information to a payment device associated with the NFC tag, where the payment device is configured to execute a payment procedure based on the transaction identification information.

The payment device can be understood as a device that can send a transaction request to a server that processes a transaction. A program or a terminal application used to execute the payment procedure can be installed on the payment device. In actual applications, the payment device can represent a device of another transaction party that carries out a transaction with a user of the mobile terminal. Specifically, the payment device can include a cash collection device, a self-check device, etc. The payment device can include the NFC tag, or the NFC tag can include a device identification of the payment device, so that the payment device has a correspondence with the NFC tag. In actual applications, the payment device can further send, based on the payment procedure, a payment processing request to a server that processes a payment request, so that the server completes a payment transaction between two transaction parties.

In a scenario of performing payment by using the mobile device, the mobile terminal can represent a device of a payer, and the payment device can represent a device of a payee. In a scenario of performing collection by using the mobile device, the mobile terminal can represent a device of a payee, and the payment device can represent a device of a payer.

It should be understood that in the method described in one or more embodiments of this specification, sequences of some steps in the method can be exchanged with each other based on an actual requirement, or some steps in the method can be omitted or deleted.

In the method in FIG. 5, the mobile terminal obtains, through near field communication, the tag information used to trigger the payment procedure in the NFC tag, obtains the transaction identification information, and sends the transaction identification information to the payment device, to perform payment. In this way, there is no need for the user to find a payment application and then perform a corresponding payment operation in the payment application. For example, in a scenario in which a payment code needs to be displayed and scanned by the payment device for payment, there is no need for the user to find a payment application and then select a payment code in the payment application for display. In this embodiment of this specification, the mobile terminal can send, to the payment device based on the information in the NFC tag, transaction identification information used to perform payment, to simplify user operations and improve user experience.

To ensure payment security, the mobile terminal can request, based on an actual transaction requirement, the server to generate the transaction identification information. There can be different transaction identification information in different payment processes. Optionally, in this embodiment of this specification, the obtaining, based on the tag information, transaction identification information used to indicate user payment account information in the mobile terminal can specifically include:
sending a payment information obtaining request including the user identification information in the mobile terminal to the server; and
obtaining the transaction identification information generated by the server based on the user identification information.

The user identification information can be a user ID, or can be identification information that can be used to determine the user payment account, for example, a device identification of the mobile terminal or a user application identification of the user in the terminal application. The server can determine the user payment account based on the user identification information, and generate transaction identification information that has a correspondence with the user payment account, to subsequently process a payment transaction by using the user payment account based on the transaction identification information. In actual applications, the transaction identification information can also be a character string such as payment QR code digits or a transaction order number, and the server can process the transaction between the two transaction parties based on the transaction identification information.

In this embodiment of this specification, the transaction identification is sent to the payment device through near field communication, or can be transmitted through a network. In an implementation, in this embodiment of this specification, the sending the transaction identification information to a payment device can specifically include:
sending the transaction identification information to the payment device through near field communication.

The payment device can have an NFC function, for example, has an NFC module, and can receive data sent through near field communication. The mobile terminal can send the transaction identification information to the payment device through near field communication.

The sending the transaction identification information to the payment device through near field communication can specifically include:
writing the transaction identification information into the NFC tag; and
feeding back the transaction identification information to the payment device through near field communication based on the NFC tag.

Herein, a communication mode of the NFC tag can be used. The transaction identification information is written into the NFC tag, and is directly transparently transmitted to the payment device. The NFC tag does not need to store the transaction identification information.

In another implementation, in this embodiment of this specification, the tag information can include a device identification of the payment device, and the sending the transaction identification information to a payment device can specifically include:
sending a payment request including the device identification to the server.

The server is configured to: generate the transaction identification information, and send the transaction identification information to the payment device based on the device identification.

In this embodiment of this specification, the server can generate the transaction identification information, and can further send the information to the payment device. In actual applications, a distance between the mobile terminal and the NFC tag needs to be relatively small for short-range communication, and a specific period of time is also required for data transmission, and may be one second, two seconds, three seconds, etc. If the distance between the mobile terminal and the NFC tag falls within a preset range for relatively short duration, the transaction identification information may be unable to be transmitted through short-range communication. To ensure normal execution of the transaction, the transaction identification information can be sent to the payment device by using the server.

In actual applications, the above-mentioned two transmission manners can be performed sequentially or performed synchronously. The payment device can obtain the transaction identification information in any manner. Because the transaction identification information transmitted in the two transmission manners is the same, and the transaction identification information can be used only once, an entire payment system can ensure idempotence, to ensure normal execution of the transaction. If the payment device does not have a capability of obtaining information transmitted through near field communication, the transaction identification information can be sent to the payment device by using a server.

Similar to the above-mentioned embodiments, the tag information in this embodiment can include first link information used to start a payment application in the mobile terminal, and the method in this embodiment of this specification can further include:
starting the payment application based on the first link information.

The obtaining transaction identification information used to indicate user payment account information in the mobile terminal can specifically include:
obtaining the transaction identification information based on the started payment application.

The tag information can include an identification of a specified payment application. After obtaining the tag information, the mobile terminal can start the specified payment application, and perform payment based on the payment application. The transaction identification information can be transaction identification information fed back by the server to the payment application after the payment application sends a request to the server.

To improve a sense of security of the user for payment, in this embodiment of this specification, prompt information can be further generated, to notify the user that the mobile terminal starts the payment application, so as to perform payment by using the payment application. Optionally, in this embodiment of this specification, after the starting the payment application, the method can further include:
displaying prompt information used to indicate that the payment application is started. The prompt information can specifically include prompt information in a form of vibration, a sound, a text, an image, etc., and can further include a start page of the payment application, so that the user can perceive that the payment application is started.

In actual applications, the prompt information can be displayed at an upper layer or in a part of an area of a page that is currently being displayed by the mobile terminal, the user can further perform a preset operation to close the prompt information, and the terminal can continue to display the page that is currently being displayed.

In actual applications, the payment application can alternatively be started in the background of the mobile terminal, and the user can alternatively be imperceptible. In this way, disturbance to the user can be reduced. For example, if the user is using another application in the mobile terminal, use of the application by the user can be prevented from being interrupted, and disturbance to the user can be reduced.

In this embodiment of this specification, a payment result page can further be displayed, so that the user learns of a payment situation. Optionally, the method in this embodiment of this specification can further include:
obtaining transaction result information fed back by the server; and
displaying a transaction result page based on the transaction result information.

The transaction result information can be result information obtained by the server by processing a payment processing request that includes the transaction identification information and that is sent by the payment device, and can be information indicating a transaction success, or can be information indicating a transaction failure. A process in which the server processes the payment processing request can be the same as an existing processing process. Details are not described herein again.

Similar to the above-mentioned embodiments, in actual applications, before performing payment, the user can be processing another service in the mobile terminal, for example, is watching a video, playing a game, reading an e-book, reading news, or communicating with another user through instant messaging. In this embodiment of this specification, the user can perform payment without a need to exit a current application that is being used before payment. Optionally, in this embodiment of this specification, if the mobile terminal is displaying an application page of a second application when the tag information in the NFC tag is obtained, displaying the transaction result page can specifically include:
displaying the transaction result page at an upper layer of the application page of the second application through superimposition.

In actual applications, the transaction result page can be displayed in a part or all of an area on the application page of the second application.

Optionally, the method in this embodiment of this specification can further include:
obtaining an exit operation performed on the transaction result page; and
switching to the application page of the second application based on the exit operation for display.

Similar to the transaction result page in the above-mentioned embodiments, the transaction result page in this embodiment can include a control used to indicate to exit the page, for example, a confirmation control or a close control. The user can exit the payment page by performing an operation on the control, or can exit the page by performing a preset operation on the page, for example, a sliding operation in a preset direction such as a leftward sliding operation, a rightward sliding operation, an upward sliding operation, or a downward sliding operation. In this embodiment of this specification, after the transaction result page is exited, an application page displayed by the terminal before payment can continue to be displayed, to further improve user experience.

In actual applications, if the payment device has a code scanning function, a payment code such as a payment QR code displayed in the mobile terminal can be scanned. In this embodiment of this specification, the mobile terminal can alternatively display a payment code page based on short-range communication, or can simplify operations that the user opens the payment application and then displays the payment code page. Optionally, the method in this embodiment of this specification can further include:
generating a payment code image based on the transaction identification information; and
displaying the payment code image.

The sending the transaction identification information to a payment device can specifically include:
sending the transaction identification information to a payment device with a code scanning function by using the payment code image.

In this embodiment of this specification, the payment device can include a device with a code scanning function, for example, a POS terminal, a code scanning box, or a code scanner. In this embodiment, the payment identification information can be obtained based on the tag information in the NFC tag, and then the payment code image is generated based on the payment identification information. The payment device can scan the payment code image for payment. The payment identification information can be simply understood as information that is used to perform payment and that is included in an existing payment code, for example, payment QR code digits in the payment QR code. In this embodiment of this specification, the generated payment code image can be an image that is the same as or has the same function as the payment code image generated by using a payment QR code control in the mobile terminal, and the payment device can process the payment service based on an existing payment procedure by scanning the code image.

In this embodiment of this specification, a payment procedure executed by the payment device after the transaction identification information is obtained can be consistent with an existing payment procedure executed after the transaction identification information is obtained by scanning a code, and service processing can be performed based on the existing procedure, without a need to establish a new processing procedure, to reduce resources, and reduce workload of a developer.

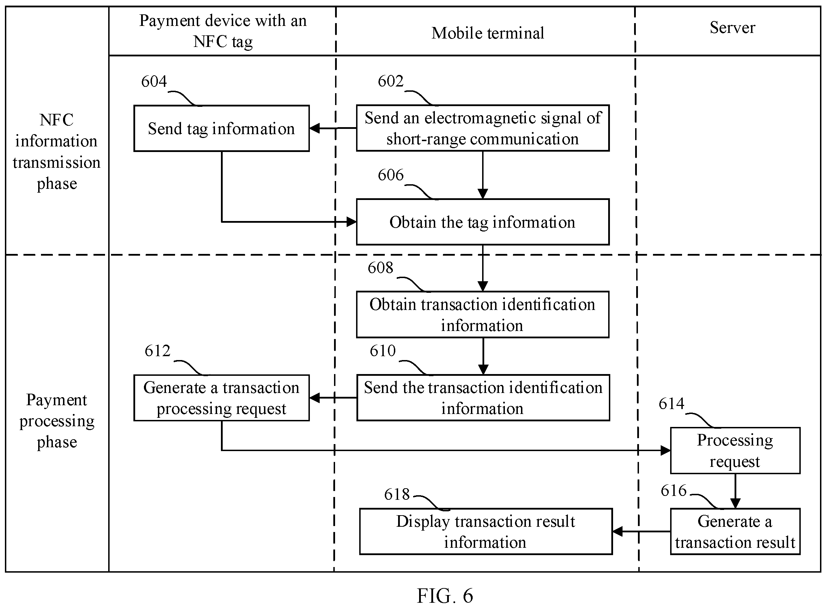

To describe more clearly the payment method based on near field communication provided in the embodiments of this specification, FIG. 6 is a swimlane diagram of a payment method based on near field communication according to an embodiment of this specification. As shown in FIG. 6, the method can include an NFC information transmission phase and a payment processing phase, and can specifically include the following steps.

Step 602: A mobile terminal with a near field communication function sends an electromagnetic signal used to trigger an NFC tag. An NFC function of the mobile terminal can be enabled to send the electromagnetic signal, to trigger an NFC electronic tag or chip within a preset distance to establish near field communication.

Step 604: When the mobile terminal approaches or abuts the NFC tag, the mobile terminal can establish near field communication with the NFC tag, where the NFC tag can send tag information to the mobile terminal. The tag information can include information used to trigger a payment procedure.

Herein, that the NFC tag is located in a payment device is used as an example for description. In actual applications, the NFC tag can alternatively be deployed separately from the payment device. This is not specifically limited.

Step 606: The mobile terminal can obtain the tag information in the NFC tag in response to the electromagnetic signal. The tag information can include identification information of a first transaction party, for example, a user ID, a merchant identification, or merchant authorization information, and can further include information used to start a payment application in the mobile terminal.

Step 608: The mobile terminal obtains, based on the tag information, transaction identification information used to indicate user payment account information in the mobile terminal.

The transaction identification information can be generated by a server based on user information of the mobile terminal and fed back to the mobile terminal.

Step 610: Send transaction identification information to the payment device. A transaction identification information can be sent to the payment device in one or two of the above-mentioned two manners.

Step 612: The payment device can generate a transaction processing request based on the transaction identification information, and send the transaction processing request to the server. The transaction processing request can include a payment device identification or an identification of a user of the payment device, can further include a transaction amount, and can further include information such as a collection account.

Step 614: The server obtains the transaction processing request sent by the payment device, and can further complete a transaction between transaction parties corresponding to the request.

Step 616: The server can further generate a transaction result and feed back the transaction result to the mobile terminal, and can further feed back the transaction result to the payment device.

Step 618: The mobile terminal can display transaction result information based on the transaction result fed back by the server. The payment device can further display information indicating the transaction result.

In this embodiment, the tag information can alternatively include the payment device identification or an identification of a merchant of the payment device, or can verify the payment device based on the identification, to determine whether the payment device has transaction permission. The transaction identification information can be obtained only when the payment device has the transaction permission. A specific verification process can be the same as or similar to that in the above-mentioned embodiments. Details are not described herein again.

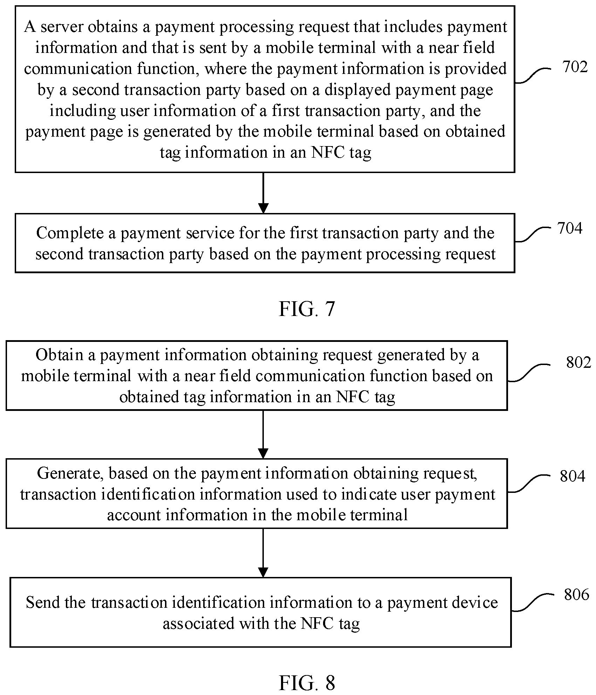

Based on the same idea, an embodiment of this specification further provides a payment method based on near field communication performed by a server. For the embodiment shown in FIG. 2, FIG. 7 is a schematic flowchart of a payment method based on near field communication according to this embodiment of this specification. From a program perspective, a procedure can be performed by a program or an application client integrated with a server.

As shown in FIG. 7, the procedure can include the following steps.

Step 702: The server obtains a payment processing request that includes payment information and that is sent by a mobile terminal with a near field communication function, where the payment information is provided by a second transaction party based on a displayed payment page including user information of a first transaction party, the payment page is generated by the mobile terminal based on obtained tag information in an NFC tag, and the tag information includes payment link information.

Step 704: Complete a payment service for the first transaction party and the second transaction party based on the payment processing request.

The server can be a server with a payment processing capability, can determine a transaction account or an account of the first transaction party based on user information of the first transaction party, for example, a merchant identification or a user identification, and can further determine a transaction amount and a transaction account or an account of the second transaction party based on transaction information provided by the second transaction party, to complete transaction processing of the transaction amount. The server in this embodiment can be equivalent to the server in the method described in FIG. 2. For a similar part or the same part, references can be made to the content described in the above-mentioned embodiments. Details are not described herein again.

FIG. 8 is a schematic flowchart of a payment method based on near field communication according to an embodiment of this specification. From a program perspective, a procedure can be performed by a program or an application client integrated with a server.

As shown in FIG. 8, the procedure can include the following steps.

Step 802: The server obtains a payment information obtaining request generated by a mobile terminal with a near field communication function based on obtained tag information in an NFC tag, where the tag information is used to trigger a payment procedure.

Step 804: Generate, based on the payment information obtaining request, transaction identification information used to indicate user payment account information in the mobile terminal.

Step 806: Send the transaction identification information to a payment device associated with the NFC tag, where the payment device is configured to execute a payment procedure based on the transaction identification information.

The server can be equivalent to the server in the method described in FIG. 5. For content specifically described herein, references can be made to the content described in the above-mentioned embodiments. Details are not described herein again. The server in this embodiment can also be the same as the server in FIG. 2 or FIG. 7. This is not specifically limited herein.

In this embodiment of this specification, information transmission between the payment device, the mobile terminal, and the server can be transmitted through a network.

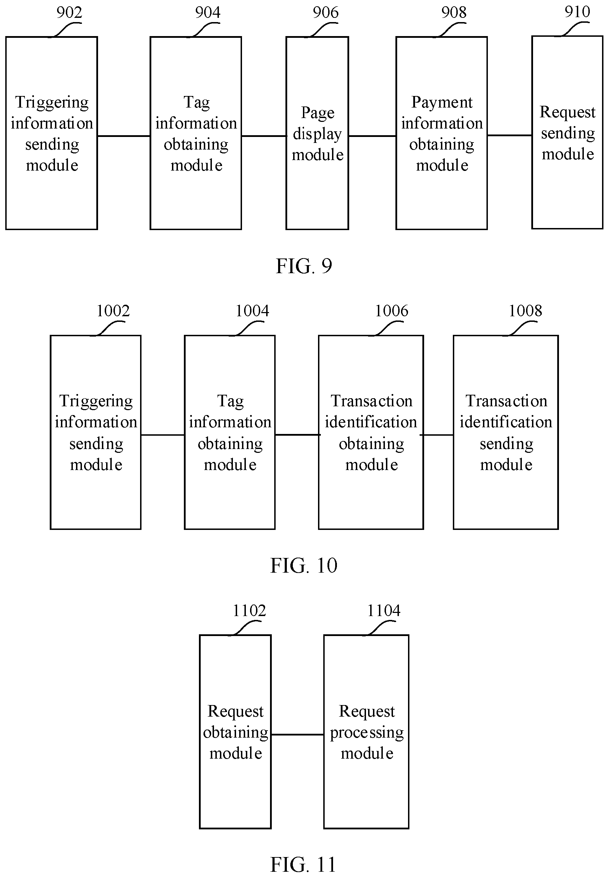

Based on the same idea, an embodiment of this specification further provides an apparatus corresponding to the above-mentioned method. FIG. 9 is a schematic diagram of a structure of a payment apparatus based on near field communication corresponding to FIG. 2 according to an embodiment of this specification. As shown in FIG. 9, the apparatus can include:
a triggering information sending module 902, configured to send an electromagnetic signal used to trigger an NFC tag;
a tag information obtaining module 904, configured to obtain tag information in the NFC tag in response to the electromagnetic signal, where the tag information includes payment link information;
a page display module 906, configured to display, based on the payment link information, a payment page including user information of a first transaction party;
a payment information obtaining module 908, configured to obtain payment information provided by a second transaction party based on the payment page; and
a request sending module 910, configured to send a payment processing request including the payment information to a server, where the server is configured to complete payment based on the payment processing request.

Based on the same idea, an embodiment of this specification further provides an apparatus corresponding to the above-mentioned method. FIG. 10 is a schematic diagram of a structure of a payment apparatus based on near field communication corresponding to FIG. 5 according to an embodiment of this specification. As shown in FIG. 10, the apparatus can include:
a triggering information sending module 1002, configured to send an electromagnetic signal used to trigger an NFC tag;
a tag information obtaining module 1004, configured to obtain tag information in the NFC tag in response to the electromagnetic signal, where the tag information is used to trigger a payment procedure;
a transaction identification obtaining module 1006, configured to obtain, based on the tag information, transaction identification information used to indicate user payment account information in the mobile terminal; and
a transaction identification sending module 1008, configured to send the transaction identification information to a payment device associated with the NFC tag, where the payment device is configured to execute a payment procedure based on the transaction identification information.

Based on the same idea, an embodiment of this specification further provides an apparatus corresponding to the above-mentioned method. FIG. 11 is a schematic diagram of a structure of a payment apparatus based on near field communication corresponding to FIG. 7 according to an embodiment of this specification. As shown in FIG. 11, the apparatus can include:
a request obtaining module 1102, configured to obtain a payment processing request that includes payment information and that is sent by a mobile terminal with a near field communication function, where the payment information is provided by a second transaction party based on a displayed payment page including user information of a first transaction party, the payment page is generated by the mobile terminal based on obtained tag information in an NFC tag, and the tag information includes payment link information; and
a request processing module 1104, configured to complete a payment service for the first transaction party and the second transaction party based on the payment processing request.

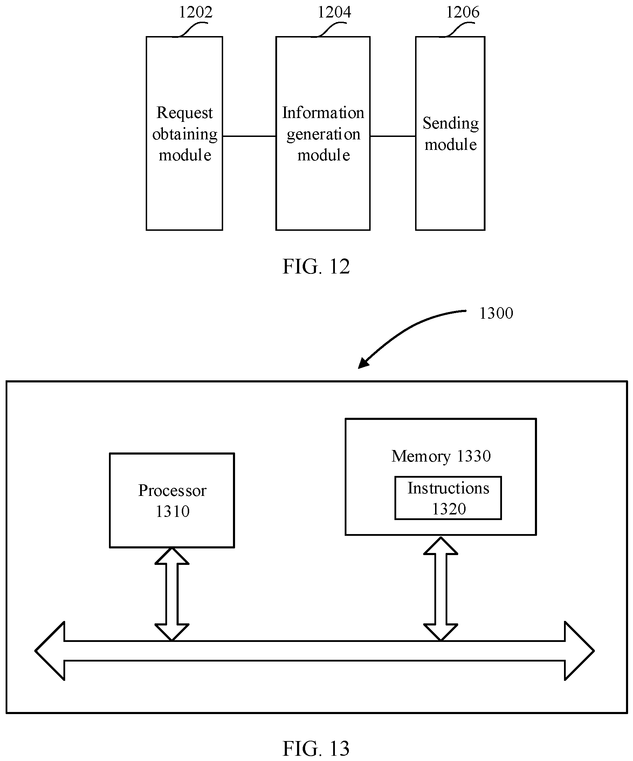

Based on the same idea, an embodiment of this specification further provides an apparatus corresponding to the above-mentioned method. FIG. 12 is a schematic diagram of a structure of a payment apparatus based on near field communication corresponding to FIG. 8 according to an embodiment of this specification. As shown in FIG. 12, the apparatus can include:
a request obtaining module 1202, configured to obtain a payment information obtaining request generated by a mobile terminal with a near field communication function based on obtained tag information in an NFC tag, where the tag information is used to trigger a payment procedure;
an information generation module 1204, configured to generate, based on the payment information obtaining request, transaction identification information used to indicate user payment account information in the mobile terminal; and
a sending module 1206, configured to send the transaction identification information to a payment device associated with the NFC tag, where the payment device is configured to execute a payment procedure based on the transaction identification information.

Based on the same idea, an embodiment of this specification further provides a device corresponding to the above-mentioned method.

FIG. 13 is a schematic diagram of a structure of a payment device based on near field communication according to an embodiment of this specification. As shown in FIG. 10, the device 1300 can include:
at least one processor 1310; and
a storage 1330 that is communicatively connected to the at least one processor.

Corresponding to the payment method based on near field communication shown in FIG. 2, the storage 1330 stores instructions 1320 that can be executed by the at least one processor 1310, and the instructions are executed by the at least one processor 1310, so that the at least one processor 1310 can perform the following operations:
sending an electromagnetic signal used to trigger an NFC tag;
obtaining tag information in the NFC tag in response to the electromagnetic signal, where the tag information includes payment link information;
displaying, based on the payment link information, a payment page including user information of a first transaction party;
obtaining payment information provided by a second transaction party based on the payment page; and
sending a payment processing request including the payment information to a server, where the server is configured to complete payment based on the payment processing request.

Corresponding to the payment method based on near field communication shown in FIG. 5, the storage 1330 stores instructions 1320 that can be executed by the at least one processor 1310, and the instructions are executed by the at least one processor 1310, so that the at least one processor 1310 can perform the following operations:
sending an electromagnetic signal used to trigger an NFC tag;
obtaining tag information in the NFC tag in response to the electromagnetic signal, where the tag information is used to trigger a payment procedure;
obtaining, based on the tag information, transaction identification information used to indicate user payment account information in the mobile terminal; and
sending the transaction identification information to a payment device associated with the NFC tag, where the payment device is configured to execute the payment procedure based on the transaction identification information.

Corresponding to the payment method based on near field communication shown in FIG. 7, the storage 1330 stores instructions 1320 that can be executed by the at least one processor 1310, and the instructions are executed by the at least one processor 1310, so that the at least one processor 1310 can perform the following operations:
obtaining a payment processing request including payment information and that is sent by a mobile terminal with a near field communication function, where the payment information is provided by a second transaction party based on a displayed payment page including user information of a first transaction party, the payment page is generated by the mobile terminal based on obtained tag information in an NFC tag, and the tag information includes payment link information; and
completing a payment service for the first transaction party and the second transaction party based on the payment processing request.

Corresponding to the payment method based on near field communication shown in FIG. 8, the storage 1330 stores instructions 1320 that can be executed by the at least one processor 1310, and the instructions are executed by the at least one processor 1310, so that the at least one processor 1310 can perform the following operations:
obtaining a payment information obtaining request generated by a mobile terminal with a near field communication function based on obtained tag information in an NFC tag, where the tag information is used to trigger a payment procedure;
generating, based on the payment information obtaining request, transaction identification information used to indicate user payment account information in the mobile terminal; and
sending the transaction identification information to a payment device associated with the NFC tag, where the payment device is configured to execute a payment procedure based on the transaction identification information.

Based on the same idea, an embodiment of this specification further provides a computer-readable medium corresponding to the above-mentioned method. The computer-readable medium stores computer-readable instructions, and the computer-readable instructions can be executed by a processor, to implement the payment method based on near field communication.

The embodiments of this specification are described in a progressive way. For same or similar parts in the embodiments, references can be made to each other. Each embodiment focuses on a difference from another embodiment. Particularly, the device shown in FIG. 13 is basically similar to the method embodiment, and therefore is briefly described. For related parts, references can be made to some descriptions in the method embodiments.

In the 1990s, whether a technical improvement is a hardware improvement (for example, an improvement to a circuit structure, such as a diode, a transistor, or a switch) or a software improvement (an improvement to a method procedure) can be clearly distinguished. However, as technologies develop, current improvements to many method procedures can be considered as direct improvements to hardware circuit structures. Almost all designers program an improved method procedure into a hardware circuit, to obtain a corresponding hardware circuit structure. Therefore, a method procedure can be improved by using a hardware entity module. For example, a programmable logic device (PLD) (for example, a field programmable gate array (FPGA)) is such an integrated circuit, and a logical function of the PLD is determined by a user through device programming. The designer performs programming to "integrate" a digital system to a PLD without requesting a chip manufacturer to design and manufacture an application-specific integrated circuit chip. In addition, currently, instead of manually manufacturing an integrated circuit chip, such programming is mostly implemented by using "logic compiler" software. The "logic compiler" software is similar to a software compiler used to develop and write a program. Original code needs to be written in a particular programming language before being compiled. The language is referred to as a hardware description language (HDL). There are many HDLs such as the Advanced Boolean Expression Language (ABEL), the Altera Hardware Description Language (AHDL), Confluence, the Cornell University Programming Language (CUPL), HDCal, the Java Hardware Description Language (JHDL), Lava, Lola, MyHDL, PALASM, and the Ruby Hardware Description Language (RHDL). At present, the Very-High-Speed Integrated Circuit Hardware Description Language (VHDL) and Verilog are most commonly used. It should also be clear to a person skilled in the art that a hardware circuit that implements a logical method procedure can be readily obtained once the method procedure is logically programmed by using the several hardware description languages described above and is programmed into an integrated circuit.

A controller can be implemented by using any proper method. For example, the controller can be a microprocessor or a processor, or a computer-readable medium that stores computer-readable program code (such as software or firmware) that can be executed by the microprocessor or the processor, a logic gate, a switch, an application-specific integrated circuit (ASIC), a programmable logic controller, or an embedded microprocessor. Examples of the controller include but are not limited to the following microprocessors: ARC 625D, Atmel AT91SAM, Microchip PIC18F26K20, and Silicone Labs C8051F320. The storage controller can also be implemented as a part of control logic of the storage. A person skilled in the art also knows that in addition to implementing the controller by using only the computer-readable program code, logic programming can be performed on method steps to enable the controller to implement the same function in a form of a logic gate, a switch, an application specific integrated circuit, a programmable logic controller, or an embedded microcontroller. Therefore, the controller can be considered as a hardware component, and an apparatus configured to implement various functions in the controller can also be considered as a structure in the hardware component. Alternatively, an apparatus configured to implement various functions can even be considered as both a software module implementing the method and a structure in the hardware component.

The systems, apparatuses, modules, or units described in the above-mentioned embodiments can be specifically implemented by a computer chip or an entity, or can be implemented by a product having a certain function. A typical implementation device is a computer. Specifically, the computer can be, for example, a personal computer, a laptop computer, a cellular phone, a camera phone, a smartphone, a personal digital assistant, a media player, a navigation device, an email device, a game console, a tablet computer, a wearable device, or a combination of any of these devices.

For ease of description, the above-mentioned apparatuses are described by dividing the apparatus into various units based on functions. Certainly, when this specification is implemented, functions of the units can be implemented in one or more pieces of software and/or hardware.

A person skilled in the art should understand that an embodiment of this specification can be provided as a method, a system, or a computer program product. Therefore, this specification can use a form of hardware only embodiments, software only embodiments, or embodiments with a combination of software and hardware. Moreover, a form of a computer program product that is implemented on one or more computer-usable storage media (including but not limited to a disk memory, a CD-ROM, an optical memory, etc.) that include computer-usable program code can be used in this specification.

This specification is described with reference to the flowcharts and/or block diagrams of the method, the device (system), and the computer program product based on the embodiments of this specification. It should be understood that computer program instructions can be used to implement each procedure and/or each block in the flowcharts and/or the block diagrams and a combination of a procedure and/or a block in the flowcharts and/or the block diagrams. These computer program instructions can be provided for a general-purpose computer, a dedicated computer, an embedded processor, or a processor of another programmable data processing device to generate a machine, so the instructions executed by the computer or the processor of the another programmable data processing device generate an apparatus for implementing a specific function in one or more processes in the flowcharts and/or in one or more blocks in the block diagrams.

These computer program instructions can be stored in a computer-readable storage that can instruct the computer or the another programmable data processing device to work in a specific way, so the instructions stored in the computer-readable storage generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

In a typical configuration, a computing device includes one or more processors (CPU), an input/output interface, a network interface, and a memory.

The memory may include a non-persistent memory, a random access memory (RAM), a non-volatile memory, and/or another form in a computer-readable medium, for example, a read-only memory (ROM) or a flash memory (flash RAM). The memory is an example of the computer-readable medium.

The computer-readable medium includes persistent, non-persistent, movable, and unmovable media that can store information by using any method or technology. Information can be a computer-readable instruction, a data structure, a program module, or other data. Examples of the computer storage medium include but are not limited to a phase change random access memory (PRAM), a static random access memory (SRAM), a dynamic random access memory (DRAM), a random access memory (RAM) of another type, a read-only memory (ROM), an electrically erasable programmable read-only memory (EEPROM), a flash memory or another memory technology, a compact disc read-only memory (CD-ROM), a digital versatile disc (DVD), or another optical storage, a cassette, a cassette magnetic disk storage, or another magnetic storage device or any other non-transmission medium. The computer storage medium can be configured to store information that can be accessed by the computing device. Based on the definition in this specification, the computer readable medium does not include transitory media such as a modulated data signal and carrier.

It is worthwhile to further note that the terms "include", "comprise", or any other variant thereof are intended to cover a non-exclusive inclusion, so that a process, a method, a product, or a device that includes a list of elements not only includes those elements but also includes other elements which are not expressly listed, or further includes elements inherent to such process, method, product, or device. Without more constraints, an element preceded by "includes a ..." does not preclude the existence of additional identical elements in the process, method, product, or device that includes the element.

A person skilled in the art should understand that the embodiments of this specification can be provided as methods, systems, or computer program products. Therefore, this specification can use a form of hardware only embodiments, software only embodiments, or embodiments with a combination of software and hardware. In addition, a form of a computer program product that is implemented on one or more computer-usable storage media (including but not limited to a disk memory, a CD-ROM, an optical memory, etc.) that include computer-usable program code can be used in this specification.

This specification can be described in the general context of computer-executable instructions, for example, a program module. Usually, the program module includes a routine, a program, an object, a component, a data structure, etc. executing a specific task or implementing a specific abstract data type. This specification can alternatively be practiced in distributed computing environments. In the distributed computing environments, tasks are executed by remote processing devices connected through a communication network. In the distributed computing environments, the program module can be located in a local and remote computer storage medium including a storage device.

The above-mentioned descriptions are merely embodiments of this specification, and are not intended to limit this specification. A person skilled in the art can make various modifications and changes to this specification. Any modification, equivalent replacement, or improvement made without departing from the spirit and principle of this specification shall fall within the scope of the claims in this specification.
Clause 1. A payment method based on near field communication, comprising:
   sending, by a mobile terminal with a near field communication function, an electromagnetic signal used to trigger an NFC tag;
   obtaining tag information in the NFC tag in response to the electromagnetic signal;
   starting, based on the tag information, the payment application in the mobile terminal; and
   displaying the payment page based on the started payment application.
Clause 2. The method according to clause 1, wherein the payment page comprises at least one of information of a first transaction party, a control used to determine payment information, an area used to fill in or select a payment amount, and an area used to fill in or select a payment manner.
Clause 3. The method according to clause 1 or 2, wherein the tag information comprises an application identification of a to-be-started payment application; starting the payment application in the mobile terminal based on the tag information specifically comprises:
   starting the payment application in the mobile terminal based on the application identification.
Clause 4. The method according to any one of clauses 1-3, wherein the method further comprises:
   determining whether the payment application exists in the terminal; and
   generating prompt information indicating that user downloads and installs the payment application if the payment application does not exist in the terminal.
Clause 5. The method according to any one of clauses 1-4, wherein the tag information includes request identification information used to request to obtain payment page information, and displaying the payment page based on the started payment application specifically comprises:
   generating, by the payment application in a started state, a payment page information obtaining request based on the request identification information;
   sending the payment page information obtaining request to the server;
   obtaining payment page information that is generated by the server based on the payment page obtaining request and that includes the user information of the first transaction party; and
   displaying the payment page, based on the payment page information.
Clause 6. The method according to any one of clauses 1-5, wherein the NFC tag is located in a carrier comprising a payment code of the first transaction party, or is located in a carrier that does not comprise a payment code of the first transaction party.
Clause 7. The method according to any one of clauses 1-6, wherein the tag information comprises first triggering information, the first triggering information is used to trigger the mobile terminal to determine a terminal application with a payment function in the mobile terminal and generate an application selection page, and the method further comprises:
   determining, in response to the first triggering information, the terminal application with the payment function in the mobile terminal;
   generating the application selection page based on the terminal application with the payment function;
   displaying the application selection page;
   obtaining a target terminal application selected by the second transaction party from the application selection page; and
   displaying, based on the payment link information, the payment page specifically comprises:
      accessing the payment link information by using the target terminal application; and
      displaying, in the target terminal application, the payment page.
Clause 8. The method according to any one of clauses 1-7, the method comprises:
   generating a page indicating a transaction result or prompt information.
Clause 9. A payment method based on near field communication, comprising:
   sending, by a mobile terminal with a near field communication function, an electromagnetic signal used to trigger an NFC tag;
   obtaining tag information in the NFC tag in response to the electromagnetic signal;
   starting the payment application based on the tag information;
   sending, based on the started payment application, payment processing request to a server, wherein the server is configured to process a payment service and to feed back a transaction result information based on the payment processing request; and
   displaying a transaction result page based on the transaction result information fed back by the server.
Clause 10. The method according to clause 9, wherein the method further comprises:
   sending a payment information obtaining request comprising the user identification information in the mobile terminal to a server;
   obtaining the transaction identification information generated by the server based on the user identification information; and
   sending the transaction identification information to a payment device associated with the NFC tag, wherein the payment device is configured to execute a payment procedure based on the transaction identification information.
Clause 11. The method according to clause 9 or 10, wherein the tag information comprises a device identification of the payment device, the method further comprises:
   sending a payment request comprising the device identification to a server; and
   the server is configured to generate the transaction identification information, and send the transaction identification information to the payment device based on the device identification.
Clause 12. The method according to clause 10, wherein sending the transaction identification information to the payment device associated with the NFC tag specifically comprises:
   sending the transaction identification information to the payment device through near field communication.
Clause 13. The method according to clause 12, wherein sending the transaction identification information to the payment device through near field communication specifically comprises:
   writing the transaction identification information into the NFC tag; and
   feeding back the transaction identification information to the payment device through near field communication based on the NFC tag.
Clause 14. The method according to any one of clauses 9-13, wherein after starting the payment application, the method further comprises:
   displaying prompt information used to indicate that the payment application is started, wherein the prompt information specifically comprises prompt information in at least one form of vibration, a sound, a text, or an image.
Clause 15. The method according to any one of clauses 9-13, wherein the tag information comprises identification of the payment application;
   starting the payment application based on the tag information, specifically comprises:
   starting the payment application based on the identification of the payment application.
Clause 16. The method according to any one of clauses 9-13, wherein the method further comprises:
   generating a payment code image based on the transaction identification information;
   displaying the payment code image; and
   sending the transaction identification information used to indicate user payment account information in the mobile terminal to a payment device associated with the NFC tag, specifically includes:
      sending the transaction identification information to a payment device with a code scanning function by using the payment code image.
Clause 17. A payment method based on near field communication, comprising:
   obtaining, by a server, a payment processing request generated by a mobile terminal with a near field communication function starting a payment application based on obtained tag information in an NFC tag; and
   processing a payment service and to feed back a transaction result information based on the payment processing request.
Clause 18. A payment apparatus based on near field communication, comprising:
   a triggering information sending module, configured to send an electromagnetic signal used to trigger an NFC tag;
   a tag information obtaining module, configured to obtain tag information in the NFC tag in response to the electromagnetic signal;
   an application starting module, configured to start a payment application on a mobile terminal based on the tag information; and
   a page display module, configured to display a payment page based on the started payment application.
Clause 19. A payment apparatus based on near field communication, comprising:
   a triggering information sending module, configured to send an electromagnetic signal used to trigger an NFC tag;
   a tag information obtaining module, configured to obtain tag information in the NFC tag in response to the electromagnetic signal;
   an application starting module, configured to start a payment application based on the tag information;
   a request sending module, configured to send a payment processing request to a server based on the started payment application, wherein the server is configured to process payment service and to feed back transaction result information based on the payment processing request; and
   a page display module, configured to display a payment page based on the started payment application.

## Claims

1. A payment method based on near field communication, comprising:
sending, by a mobile terminal with a near field communication function, an electromagnetic signal used to trigger an NFC tag;
obtaining tag information in the NFC tag in response to the electromagnetic signal;
starting, based on the tag information, the payment application in the mobile terminal; and
displaying the payment page based on the started payment application.

2. The method according to claim 1, wherein the payment page comprises at least one of information of a first transaction party, a control used to determine payment information, an area used to fill in or select a payment amount, and an area used to fill in or select a payment manner.

3. The method according to claim 1 or 2, wherein the tag information comprises an application identification of a to-be-started payment application; starting the payment application in the mobile terminal based on the tag information specifically comprises:
starting the payment application in the mobile terminal based on the application identification.

4. The method according to any one of claims 1-3, wherein the method further comprises:
determining whether the payment application exists in the terminal; and
generating prompt information indicating that user downloads and installs the payment application if the payment application does not exist in the terminal.

5. The method according to any one of claims 1-4, wherein the tag information includes request identification information used to request to obtain payment page information, and displaying the payment page based on the started payment application specifically comprises:
generating, by the payment application in a started state, a payment page information obtaining request based on the request identification information;
sending the payment page information obtaining request to the server;
obtaining payment page information that is generated by the server based on the payment page obtaining request and that includes the user information of the first transaction party; and
displaying the payment page, based on the payment page information.

6. The method according to any one of claims 1-5, wherein the NFC tag is located in a carrier comprising a payment code of the first transaction party, or is located in a carrier that does not comprise a payment code of the first transaction party.

7. The method according to any one of claims 1-6, wherein the tag information comprises first triggering information, the first triggering information is used to trigger the mobile terminal to determine a terminal application with a payment function in the mobile terminal and generate an application selection page, and the method further comprises:
determining, in response to the first triggering information, the terminal application with the payment function in the mobile terminal;
generating the application selection page based on the terminal application with the payment function;
displaying the application selection page;
obtaining a target terminal application selected by the second transaction party from the application selection page; and
displaying, based on the payment link information, the payment page specifically comprises:
accessing the payment link information by using the target terminal application; and
displaying, in the target terminal application, the payment page.

8. The method according to any one of claims 1-7, the method comprises:
generating a page indicating a transaction result or prompt information.

9. A payment method based on near field communication, comprising:
sending, by a mobile terminal with a near field communication function, an electromagnetic signal used to trigger an NFC tag;
obtaining tag information in the NFC tag in response to the electromagnetic signal;
starting the payment application based on the tag information;
sending, based on the started payment application, payment processing request to a server, wherein the server is configured to process a payment service and to feed back a transaction result information based on the payment processing request; and
displaying a transaction result page based on the transaction result information fed back by the server.

10. The method according to claim 9, wherein the method further comprises:
sending a payment information obtaining request comprising the user identification information in the mobile terminal to a server;
obtaining the transaction identification information generated by the server based on the user identification information; and
sending the transaction identification information to a payment device associated with the NFC tag, wherein the payment device is configured to execute a payment procedure based on the transaction identification information.

11. The method according to claim 9 or 10, wherein the tag information comprises a device identification of the payment device, the method further comprises:
sending a payment request comprising the device identification to a server; and
the server is configured to generate the transaction identification information, and send the transaction identification information to the payment device based on the device identification.

12. The method according to claim 10, wherein sending the transaction identification information to the payment device associated with the NFC tag specifically comprises:
sending the transaction identification information to the payment device through near field communication.

13. The method according to claim 12, wherein sending the transaction identification information to the payment device through near field communication specifically comprises:
writing the transaction identification information into the NFC tag; and
feeding back the transaction identification information to the payment device through near field communication based on the NFC tag.

14. The method according to any one of claims 9-13, wherein after starting the payment application, the method further comprises:
displaying prompt information used to indicate that the payment application is started, wherein the prompt information specifically comprises prompt information in at least one form of vibration, a sound, a text, or an image.

15. The method according to any one of claims 9-13, wherein the tag information comprises identification of the payment application;
starting the payment application based on the tag information, specifically comprises:
starting the payment application based on the identification of the payment application.

16. The method according to any one of claims 9-13, wherein the method further comprises:
generating a payment code image based on the transaction identification information;
displaying the payment code image; and
sending the transaction identification information used to indicate user payment account information in the mobile terminal to a payment device associated with the NFC tag, specifically includes:
sending the transaction identification information to a payment device with a code scanning function by using the payment code image.

17. A payment method based on near field communication, comprising:
obtaining, by a server, a payment processing request generated by a mobile terminal with a near field communication function starting a payment application based on obtained tag information in an NFC tag; and
processing a payment service and to feed back a transaction result information based on the payment processing request.

18. A payment apparatus based on near field communication, comprising:
a triggering information sending module, configured to send an electromagnetic signal used to trigger an NFC tag;
a tag information obtaining module, configured to obtain tag information in the NFC tag in response to the electromagnetic signal;
an application starting module, configured to start a payment application on a mobile terminal based on the tag information; and
a page display module, configured to display a payment page based on the started payment application.

19. A payment apparatus based on near field communication, comprising:
a triggering information sending module, configured to send an electromagnetic signal used to trigger an NFC tag;
a tag information obtaining module, configured to obtain tag information in the NFC tag in response to the electromagnetic signal;
an application starting module, configured to start a payment application based on the tag information;
a request sending module, configured to send a payment processing request to a server based on the started payment application, wherein the server is configured to process payment service and to feed back transaction result information based on the payment processing request; and
a page display module, configured to display a payment page based on the started payment application.
